# EUROPÄISCHE PATENTSCHRIFT

(11) **EP 1 771 330 B1**
(45) Veröffentlichungstag und Bekanntmachung des Hinweises auf die Patenterteilung: **02.12.2009**
(21) Anmeldenummer: 05767905.2
(22) Anmeldetag: 05.07.2005
(51) Int. Cl.: B64C 1/14

(54) **FLUGZEUGTÜR-ANORDNUNG MIT EINER SCHWENKBAREN FLUGZEUGTÜR**
AIRCRAFT DOOR ARRANGEMENT COMPRISING A PIVOTABLE AIRCRAFT DOOR
SYSTEME DE PORTE D'AERONEF COMPRENANT UNE PORTE D'AERONEF PIVOTANTE

(30) Priorität: 26.07.2004 DE 102004036184
(43) Veröffentlichungstag der Anmeldung: 11.04.2007
(73) Patentinhaber: EUROCOPTER DEUTSCHLAND GmbH, 86609 Donauwörth (DE)
(72) Erfinder: OBST, Steffen, 86655 Harburg (DE)
(74) Vertreter: GPI & Associés
(86) Internationale Anmeldenummer: PCT/EP2005/007205
(87) Internationale Veröffentlichungsnummer: WO 2006/010437

(56) Entgegenhaltungen:
- US-A- 2 997 751
- US-A- 3 085 297
- US-A- 3 213 962
- US-A- 4 199 120
- US-A- 4 479 622
- US-A- 4 510 714

## Beschreibung

### TECHNISCHES GEBIET

Die vorliegende Erfindung betrifft eine Tür-Anordnung eines Luftfahrzeugs gemäß dem Oberbegriff des Patentanspruchs 1. Ferner betrifft die Erfindung ein Luftfahrzeug mit einer solchen Tür-Anordnung.

### STAND DER TECHNIK

Es sind Tür-Anordnungen eines Luftfahrzeugs bekannt, welche über einen Rumpf mit einer Rumpfstruktur verfügen, zu der ein, Türrahmen gehört, der eine Türöffnung umgibt. Die Tür-Anordnung besitzt eine Tür, die in dem Türrahmen anzuordnen ist, und einen Türgelenkmechanismus, der an der Tür und der Rumpfstruktur angreift. Die Außenkontur der Tür hat aus aerodynamischen Gründen bündig mit der Außenkontur der dem Türrahmen benachbarten Rumpfstruktur abzuschließen. Dieser Umstand sowie die aufgrund der üblichen Leichtbauweise nicht unerhebliche Dicke der Tür bedingt, dass sich in einer Schließlage der Tür wesentliche Bereiche derselben innerhalb des Türrahmens befinden müssen, während die Tür zur Erreichung einer Öffnungslage aus dem Türrahmen heraus und teilweise oder vollständig um einen Rand des Türrahmens herum in eine im wesentlichen außerhalb des Rumpfes befindliche Position gebracht werden muss. Dies erfordert eine sehr komplexe Kinematik des Türgelenkmechanismus, weil verhindert werden muss, dass die Tür auf ihrer Bewegungsbahn mit Teilen der Rumpfstruktur kollidiert.

Wenn der Rumpf des Luftfahrzeugs eine Druckkabine aufweist, was heutzutage bei nahezu allen größeren Passagierflugzeugen der Fall ist, muss die Tür im Flugzustand gegenüber dem Türrahmen auch abgedichtet sein, um einen Druckverlust aus der Druckkabine zu vermeiden. Dies erfordert Dichtungselemente zwischen der Tür und der umgebenden Rumpfstruktur bzw. dem umgebenden Türrahmen. Um ein unbeabsichtigtes Öffnen der Tür besonders im Flugzustand zu vermeiden, ist es ferner erforderlich, die Tür in einer Schließlage zu verriegeln. Hierzu werden üblicherweise Konstruktionen verwendet, die ein Anheben der Tür aus einer verriegelten Schließlage in eine entriegelte Schließlage bzw. ein Absenken der Tür von der entriegelten Schließlage in die verriegelte Schließlage erforderlich machen.

Insbesondere Luftfahrzeugtüren, die als schwenkbare Notausstiegstüren oder als Notausstiegsluken ausgestaltet sind, müssen zum Öffnen und Schließen zumeist über einen sehr großen Schwenkwinkelbereich geführt werden, der 0° bis größer 90° ist, oftmals jedoch 0° bis ca. 180° oder mehr umfasst. Dieser große Schwenkwinkelbereich bedingt in Verbindung mit den weiter oben erläuterten notwendigen Eigenschaften der Tür und der benachbarten Rumpfstruktur einen recht aufwendigen Türgelenkmechanismus und ist ein weiterer Grund für die Komplexität der Türkinematik. Konventionelle Tür-Anordnungen eines Luftfahrzeugs versenden unter Berücksichtigung- der zuvor geschilderten Anforderungen deshalb einen Türgetenkmechanismus, der über translatorische Gelenkelemente verfügt, die unter den genannten Bedingungen den besagten großen Schwenkwinkelbereich der Tür sicherstellen.

Bei derartigen konventionellen Tür-Anordnungen hat es sich jedoch gezeigt, dass die translatorischen Gelenkelemente ein recht großes Spiel besitzen und die Tür über den großen Schwenkbereich hinweg nicht stets exakt führen können. Ferner ist aufgrund der translatorischen Gelenkelemente die Lage aller beteiligten Gelenkelemente während eines Öffnungs- bzw. Schließvorgangs der Tür nicht eindeutig bestimmt. Überdies ist bei der Verwendung eines Türgelenkmechanismus mit translatorischen Gelenkelementen die Lage der Tür zum Türrahmen nicht exakt genug festlegbar, was wiederum dazu führt, dass die Abdichtung der Tür gegen einen Kabineninnendruck nur sehr aufwendig zu realisieren ist, und der Dichtungsverlauf wird ungünstig. Und darüber hinaus ist in einer Öffnungslage der Tür die Lastübertragung und Lasteinleitung der von der geöffneten Tür ausgehenden Lasten zur und in die Rumpfstruktur ungünstig.

Eine Tür-Anordnung eines Luftfahrzeugs gemäß dem Oberbegriff des Anspruchs 1 ist aus der US-A-4,199,120 bekannt.

### DARSTELLUNG DER ERFINDUNG

Der Erfindung liegt die Aufgabe beziehungsweise das technische Problem zugrunde, die dem gattungsgemäßen Stand der Technik anhaftenden Nachteile möglichst weitgehend zu vermeiden und eine Tür-Anordnungen eines Luftfahrzeugs mit einem Türgelenkmechanismus zu schaffen, mit dem die Tür über einen möglichst großen Schwenkwinkelbereich stets zuverlässig geöffnet und verschlossen und gegen eine Rumpfstruktur des Luftfahrzeugs abgedichtet werden kann; hierbei soll die Tür der Tür-Anordnungen in mindestens einer Ausführungsform als Notausstiegstür ausführbar sein. Ferner soll ein Luftfahrzeug mit einer solchen Tür-Anordnung geschaffen werden.

Die vorhergenannte Aufgabe wird gemäß einem ersten Aspekt gelöst durch eine erfindungsgemäße Tür-Anordnung mit den Merkmalen des Anspruchs 1.

Die Grundform der erfindungsgemäßen Tür-Anordnung nach Patentanspruch 1 gilt für eine Konstruktion, bei der die Tür zum Entriegeln nicht angehoben und zum Verriegeln nicht abgesenkt werden muss. Eine erfindungsgemäße Tür-Anordnung, bei der die Tür zusätzlich die zuvor erwähnten Entriegelungs- bzw. Verriegelungseigenschaften aufweist, besitzt weitere bevorzugte erfindungsgemäße Zusatzkomponenten, auf die weiter unten noch näher eingegangen werden wird.

Die Tür ist zweckmäßigerweise an einem seitlichen Bereich des Rumpfes angeordnet. Je nach Rumpfstruktur kann sie jedoch auch an jeder anderen geeigneten Stellen des Rumpfes positioniert sein. Ferner ist die Tür vorzugsweise als eine Notausstiegstür oder Notaussfiegsluke ausgebildet. Grundsätzlich ist die Erfindung jedoch nicht auf eine solche Türart beschränkt. Die Tür kann in geeigneten Anwendungsfällen z.B. auch als Passagiertür, Cargotür oder Heckklappe oder dergleichen ausgestaltet sein. Im Rahmen der erfindungsgemäßen Tür-Anordnung ist sowohl eine manuell als auch automatisch bzw. durch Stellglieder oder Aktuatoren zu öffnende und zu schließende Tür realisierbar. Falls die Tür als Notausstiegstür bzw. -luke ausgelegt ist und nicht ausschließlich manuell zu betätigen sein soll, verfügt sie in mindestens einer Ausführungsform vorzugsweise über einen autonomen Notöffnungsantrieb, der entweder als separater Antrieb ausgeführt oder aber in einen regulären Türantrieb (kein Notfall) integriert sein kann.

Die Nullgrad-Lage der Tür soll im Rahmen dieser Erfindung als diejenige Lage verstanden werden in der die Tür verschlossen bzw. verschlossen und verriegelt ist. Der vorbestimmte Schwenkwinkelbereich umfasst vorzugsweise einen Bereich von 0 Grad bis größer 90 Grad, insbesondere 0° bis ca. 180° und größer (z.B. bis 200°, 210° oder 220°), ebenso aber auch Bereiche wie z,B. 0° bis 95°, 0° bis 100°, 0° bis 110°, 0 bis 120°, 0° bis 130°, 0° bis 140°, 0° bis 150°, 0° bis 160°, 0° bis 170°, sowie die entsprechenden Zwischenbereiche.

Der Türgelenkmechanismus der erfindungsgemäßen Türanordnung greift zweckmäßigerweise türseitig an einem Radbereich der Tür und rumpfseitig am Türrahmen und/oder an einem rahmennahen Bereich der Rumpfstruktur an. Da die sieben Gelenke des 7.Gelenk-Getdebes ausschließlich als Rotationsgelenke ausgestaltet sind, verfügt es also über keine translatorischen bzw. translatorisch gelagerten Getriebeelenlente. Bei einer geeigneten Fertigungsgenauigkeit kann jedes Rotationsgelenk über nur eine einzige Drehachse verfügen. Zur leichteren Kompensation von insbesondere tür- und rahmenseitig auftretenden Einbautoleranzen können die Rotationsgelenke jedoch auch als sphärische Gelenkelemente, z.B. in der Art von sog. Gelenklagern, ausgestaltet werden. Das 7-Gelenk-Getriebe führt die Tür über den gesamten Schwenkwinkelbereich auf einer exakt definierten Bewegungsbahn.

Das 7-Gelenk-Getriebe kann hierbei erfingdungsgemäß derart konstruiert sein, dass es die Tür nicht nur führt, sondern diese bzw. deren Gewicht auch vollständig oder zumindest teilweise trägt. Falls das 7-Gelenk-Getriebe derart ausgestaltet ist, dass es die Tür nur führt aber nicht oder nur teilweise trägt, kann eine separate Trageinrichtung für die Tür vorgesehen werden, welches die besagte Tragfunktion ganz oder teilweise übernimmt. Ein solche Trageinrichtung kann z.B. in eine Betätigungseinrichtung der Tür, z.B. einen Stellantrieb wie z.B. einen Stellzylinder oder dergleichen, integriert sein.

Die erfindungsgemäße Tür-Anordnungen ermöglicht es mit ihrem 7-Gelenk-Getriebe, die Tür beim Öffnen und Schließen über einen sehr großen Schwertkwinkelbereich hinweg stets exakt und auf einer genau bestimmten Bewegungsbahn zu führen. Diese hohe Präzision wird insbesondere dadurch gewährleistet, dass das 7-Gelenk-Getriebe über keine translatorischen bzw. translatorisch gelagerten Getriebeelemente verfügt und die sieben Gelenke ausschließlich als Rotationsgelenke ausgebildet sind, bei denen leicht eine hohe Passgenauigkeit und ein sehr geringes Lagerspiel realisierbar ist. Die genau bestimmte Bewegungsbahn der Tür wird durch die Kinematik des 7-Gelenk-Getriebes festgelegt. Das 7-Gelenk-Getriebe stellt auch sicher, dass die Lage aller beteiligten Getriebeelemente während eines Bewegungsvorgangs der Tür stets eindeutig bestimmt ist.

Ferner hat es sich gezeigt, dass das 7-Gelenk-Getriebes trotz seiner ausschließlich als Rotationsgelenke ausgebildeten Gelenke in der Lage ist, einen Öffnungs- und Schließvorgang zu bewirken, bei dem die Tür ausgehend von einer Schließlage, bei der sich wesentliche Bereiche der Tür innerhalb des Türrahmens befinden, aus dem Türrahmen heraus und teilweise oder vollständig um einen Rand des Türrahmens herum in eine im wesentlichen außerhalb des Rumpfes befindliche Öffnungslage bringen lässt, ohne hierbei mit der Rumpfstruktur zu kollidieren. Auch diesbezüglich ist eine erhöhte Zuverlässigkeit und Präzision erreichbar.

Mit dem 7-Gelenk-Getriebe der erfindungsgemäßen Türanordnung ist zudem in einer Schließlage die Position der Tür in Bezug zum Türrahmen eindeutig und sehr passgenau festlegbar. Dadurch lässt sich die Tür einfacher und präziser gegen einen Kabineninnendruck des Rumpfes abdichten, und es wird ein günstiger Dichtungsvedauf erzielt, Und schließlich ermöglicht die erfindungsgemäße Tür-Anordnung mit ihrem, 7-Gelenk-Getriebe in einer Öffnungslage der Tür eine sehr günstige Lastübertragung und Lasteinleitung der von der geöffneten Tür ausgehenden Lasten zur und in die Rumpfstruktur.

Weitere bevorzugte und vorteilhafte Ausgestaltungsmerkmale der erfindungsgemäßen Tür-Anordnung sind Gegenstand der Unteransprüche 2 bis 14.

Die oben genannte Aufgabe wird gemäß einem zweiten Aspekt gelöst durch ein erfindungsgemäßes Luftfahrzeug mit den Merkmalen des Anspruchs 15.

Dieses Luftfahrzeug umfasst mindestens eine Flugzeugtür-Anordnung nach einem oder mehreren der Ansprüche 1 bis 14. Das Luftfahrzeug ist insbesondere als ein Tragflächenflugzeug ausgestaltet und verfügt bevorzugt über eine Druckkabine. Grundsätzlich kann es jedoch auch als ein Drehflügelflugzeug oder ein Verwandlungsflugzeug, z.B. in Form eines Kipprotorhubschraubers, ausgebildet sein. Mit dem erfindungsgemäßen Luftfahrzeug sind im Wesentlichen die gleichen Vorteile zu erzielen, die weiter oben in Zusammenhang mit der erfindungsgemäßen Tür-Anordnung erläutert wurden.

Ein bevorzugtes Ausführungsbeispiel der Erfindung mit zusätzlichen Ausgesteltungsdetails und weiteren Vorteilen ist nachfolgend unter Bezugnahme auf die beigefügten Zeichnungen näher beschrieben und erläutert.

### KURZE BESCHREIBUNG DER ZEICHNUNGEN

Es zeigt:
- Fig. 1: eine schematische Querschnittsansicht eines seitlichen Bereichs eines Flugzeugrumpfes mit einer erfindungsgemäßen Tür-Anordnung in einem ersten Zustand;
- Fig. 2: eine schematische Perspektivansicht der erfindungsgemäßen Tür-Anordnung von Fig. 1 in Blickrichtung des Pfeils I in Fig. 1;
- Fig.3: eine schematische Querschnittsansicht der erfindungsgemäßen Tür-Anordnung von Fig. 1 in einem zweiten Zustand; und
- Fig.4: eine schematische Querschnittsansicht der erfindungsgemäßen Tür-Anordnung von Fig. 1 in einem dritten Zustand;

### DARSTELLUNG EINES BEVORZUGTEN AUSFÜHRUNGSBEISPIELS

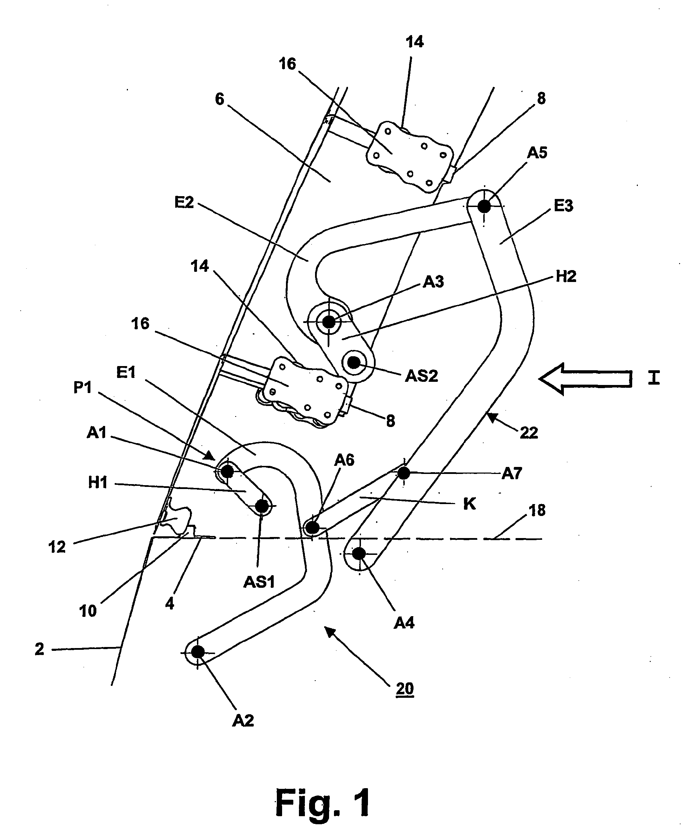

In der Fig. 1 ist in einer schematischen Querschnittsansicht ein seitlicher Bereich eines mit einer Druckkabine versehenen Rumpfes 2 eines erfindungsgemäßen Passagierflugzeugs dargestellt, welches mit einer erfindungsgemäßen Tür Anordnung ausgestattet ist. Der Rumpf 2 besitzt eine Rumpfstruktur, zu der ein Türrahmen 4 gehört, der eine im Rumpf 2 befindliche Türöffnung umgibt. Eine in diesem Ausführungsbeispiel als Notausstiegstür ausgestaltete, zu öffnenden und zu schließende Tür 6, die über eine Türstruktur 8 verfügt, ist in dem Türrahmen 4 angeordnet. Bei dieser Tür 6 handelt es sich um einen solchen Türtyp, der ausgehend von einer Öffnungslage in eine Schließlage bringbar und mit Hilfe eines Tür-Verriegelungsmechanismus in der Schließlage verriegelbar ist und zum Verriegeln abgesenkt und zum Entriegeln wieder angehoben werden muss. Zum Zwecke des Anhebens und Absenkens der Tür 6 ist die Tür-Anordnung mit einer nachfolgend noch genauer beschriebenen Hubeinrichtung versehen, mit der die Tür 6 ausgehend von einer verriegelten Schließlage in eine entriegelte Schließlage anhebbar ist. Von dort wiederum kann die Tür 6 dann in die Öffnungslage bewegt werden, Feiner ist die Tür 6 mittels der Hubeinrichtung umgekehrt von der entriegelten Schließlage in die verriegelte Schließlage absenkbar.

Zwischen Tür 6 und Türrahmen 4 sind Dichtungselemente in der Form einer rahmenseitigen, umlaufenden, ununterbrochenen Dichtkante 10 und einer türseitigen Türdichtung 12 vorgesehen.

Der Tür-Verriegelungsmechanismus besitzt mehrere türseitige Beschläge 14 und mehrere türrahmenseitige (nachfolgend kurz "rahmenseitige" genannt) Beschläge 16, die im geschlossenen und verriegelten Zustand der Tür 6 zusammenwirken. Die Fig. 1 zeigt die Tür 6 in einem ersten Zustand (Flugzustand), in dem sie geschlossen, abgesenkt und damit verriegelt ist. Wie in der Zeichnung ferner erkennbar ist, liegt der untere Rand der Tür 6 hierbei annähernd auf gleicher Ebene mit einem Kabinenboden 18 (in der Fig. 1 durch eine gestrichelte Linie angedeutet) des Rumpfes 2.

Die Tür-Anordnung umfasst des Weiteren einen Türgelenkmechanismus, der an der Tür 4 und der Rumpfstruktur angreift. Genauer gesagt, greift der Türgelenkmechanismus türseitig an einem unteren und seitlichen Randbereich der Tür 6 und rumpfseitig an einem unteren Bereich des Türrahmens 4 bzw. der benachbarten rahmennahen Rumpfstruktur an. Der Türgelenkmechanismus weist ein mit einer ersten bis siebten Gelenkachse A1 bis A7 versehenes 7-Gelenk-Getriebe 20 auf. Die Gelenkachsen A1 bis A7, welche ausschließlich durch Rotationsgelenke gebildet sind, verlaufen zueinander parallel und annähernd in Längsrichtung des Rumpfes 2. Eine der Gelenkachsen des 7-Gelenk-Getriebes 20, nämlich die Gelenkachse A1, definiert eine eindeutige, rotatorische und relativ zur Tür 6 ortsfest positionierbare Tür-Schwenkachse A1. Diese Tür-Schwenkachse A1, auf die nachfolgend noch detaillierter eingegangen werden wird, liegt in diesem Beispiel im Bereich des unteren Randes der Tür 6 in der Nähe des Kabinenbodens 18.

Das 7-Gelenk-Getriebe 20 trägt und führt die Tür 6 bei einem Entriegelungs-, Verriegelungs-, Öffnungs- und Schließvorgang. Hierbei ist die Tür 6 durch das 7-Gelenk-Getriebe 20 ausschließlich rotationsgelenkig geführt über einen Schwenkwinkelbereich von 0 Grad bis ca. 180 Grad schwenkbar. Dadurch ist die Tür 6 ausgehend von der im Türrahmen 4 befindliche Schließlage seitlich und nach unten zu der außerhalb des Türrahmens 4 und des Rumpfes 2 befindlichen Öffnungslage und zurück bewegbar.

Wie in der Fig. 1 des Weiteren zu erkennen ist, besitzt das 7-Gelenk-Getriebe 20 drei gelenkig gelagerte und jeweils in einem gewissen Abstand versetzt zueinander angeordnete hebelartige Getriebeglieder E1 bis E3 sowie ein gelenkig gelagertes, hebelartiges Koppelelement K. Das Koppelelement K verbindet die zwei Getrjebeglieder E1 und E3 gelenkig miteinander. Das Koppelelement K verhindert, dass sich die Getriebeglieder E1 und E3 relativ zueinander frei bewegen können, wodurch der Bewegungsablauf der Getriebemechanik undefiniert wäre, und verleiht dem 7-Gelenk-Getriebe 20 den Getriebefreiheitsgrad 1. Dadurch erhält jedes Element des 7-Gelenk-Getriebes 20 während eines Bewegungsablaufes eine eindeutige Lage.

Betrachtet man das 7-Gelenk-Getriebe 20 ip Richtung seiner zueinander parallelen Gelenkachsen A1 bis A7, so ergibt sich gemäß der Garstellung nach Fig. 1 folgende Konfiguration. Das erste Getriebeglied E1 ist an seinem oberen Ende mit der ersten Gelenkachse A1, die relativ zur schwenkbaren Tür 6 ortsfest positionierbar ist und die Tür-Schwenkachse A1 bildet, gelenkig an der Tür 6 gelagert, An seinem unteren Ende ist das erste Getriebeglied E1 mit der zweiten Gelenkachse A2, die in Bezug zum Türrahmen 4 ortsfest ist und unterhalb des Kabinenbodens 18 liegt, gelenkig an dem Türrahmen 4 gelagert. Das zweite Getriebeglied E2 ist an seinem unteren Ende mit der dritten Gelenkachse A3, die relativ zur Tür 6 ortsfest positionierbar ist, gelenkig an der Tür 6 gelagert. Das dritte Getriebeglied E3 ist an seinem unteren Ende mit der vierten Gelenkachse A4, die in Bezug zum Türrahmen 4 ortsfest ist, gelenkig am Türrahmen 4 gelagert.

Ein oberes freies Ende des zweiten Getriebeglieds E2 ist über die fünfte Gelenkachse A5, die relativ zur Tür 6 und dem. Türrahmen 4 nicht-ortsfest ist, gelenkig mit einem oberen freien Ende des dritten Getriebeglieds E3 verbunden. Dadurch besitzen die besagten oberen Enden des zweiten E2 und dritten Getriebeglieds E3 die fünfte Achse A5 als gemeinsame Achse A5. Und das zweite Getriebeglied E2 ist um die dritte Gelenkachse A3 und das dritte Getriebeglied E3 um die vierte Gelenkachse A4, die etwas unterhalb des Kabinenbodens 18 liegt, schwenkbar. Das Koppelelement K greift an seinem unteren Ende mit der sechsten Gelenkachse A6 gelenkig an einem Zwischenabschnitt des ersten Getriebeglieds E1 an. Mit seinem oberen Ende greift das Koppelelement K mit der siebten Gelenkachse A7 an einem Zwischenabschnitt des dritten Getriebeglieds E3 an. Das Koppelelement K hat demnach keinertei Verbindung zu der Tür 6 und dem Türrahmen 4, sondern lediglich zu dem ersten und dritten Getriebeglied E1 und E3.

Wie aus der schematischen Querschnittsansicht der Fig. 1 ersichtlich ist, besitzt das erste Getriebeglied E1 ein hakenförmig ausgestaltetes oberes Ende und unterhalb der Gelenkachse A6 eine Abwinkelung. Bei dem zweiten Getriebeglied E2 ist das untere Ende hakenförmig gekrümmt, Das dritte Getriebeglied E3 ist oberhalb der Gelenkachse A7 abgewinkelt.

Im vorliegenden Ausführungsbeispiel ist die Hubeinrichtung der Tür als Teil des 7-Gelenk-Getriebes 20 ausgebildet. Das 7-Gelenk-Getriebe 20 besitzt zu diesem Zweck zwei schwenkbare hebelartige Tür-Anhebeglieder H1, H2, die in Relation zu den Getriebegliedern E1 bis E3 relativ kurz ausgebildet sind. Wie in Fig. 1 erkennbar ist, greift das erste Tür-Anhebeglied H1 an einem Ende über die erste Gelenkachse A1 gelenkig am oberen Ende des ersten Getriebeglieds E1 an. Dadurch wird das erste Getriebeglied E1 durch das erste Tür-Anhebeglied H1 gelenkig an der Tür 6 gelagert. Mit dem anderen Ende greift das erste Tür-Anhebeglied H1 über eine erste Schwenkachse AS1, die in Bezug zur Tür 6 ortsfest ist, an der Tür 6 an. Das zweite Tür-Anhebeglied H2 greift an einem Ende über die dritte Gelenkachse A3 gelenkig am unteren Ende des zweiten Getriebeglieds E2 an. Dadurch wird das zweite Getriebeglied E2 durch das zweite Tür-Anhebeglied H2 gelenkig an der Tür 6 gelagert. Mit dem anderen Ende greift das zweite Tür-Anhebeglied H2 über eine zweite Schwenkachse AS2, die in Bezug zur Tür 6 ortsfest ist, an der Tür 6 an.

Darüber hinaus ist eine den beiden Tür-Anhebegliedem H1, H2 zugeordnete Sperreinrichtung (nicht gezeigt) vorgesehen ist, welche eine Schwenkbewegung der Tür-Anhebeglieder H1, H2 um ihre Schwenkachsen AS1 und AS2 unter bestimmten Bedingungen gestattet bzw. sperrt, D.h., zum Anheben der Tür 6 in die entriegelte Schließlage und zum Absenken der Tür 6 in die verriegelte Schließlage lässt die Sperreinrichtung eine Schwenkbewegung der beiden Tür-Anhebeglieder H1, H2 um ihre Schwenkachsen AS1, AS2 zu und gestattet damit eine Bewegung der ersten Gelenkachse A1 und der dritten Gelenkachse A3 relativ zur Tür 6. Zum Aufschwenken der angehobenen Tür 6 von der entriegelten Schließlage in die Öffnungslage, und umgekehrt zum Zurückschwenken von der Öffnungslage in die angehobene entriegelte Schließlage, hingegen sperrt die Sperreinrichtung die Schwenkbewegung der beiden Tür-Anhebeglieder H1, H2 in einer vorbestimmten Schwenkposition, wodurch die erste Gelenkachse A1 und die dritte Gelenkachse A3 relativ zur Tür 6 ortfest positioniert werden.

Grundsätzlich ist es möglich, die beiden Tür-Anhebeglieder H1, H2 auch in der abgesenkten, verriegelten Schließlage der Tür 6 durch die Sperreinrichtung zu sperren. Dadurch kann die Tür 6 nicht unbeabsichtigt oder z.B. durch eine Fehlfunktion eines eventuell vorgesehenen automatischen Hubantriebs angehoben und dadurch entriegelt werden.

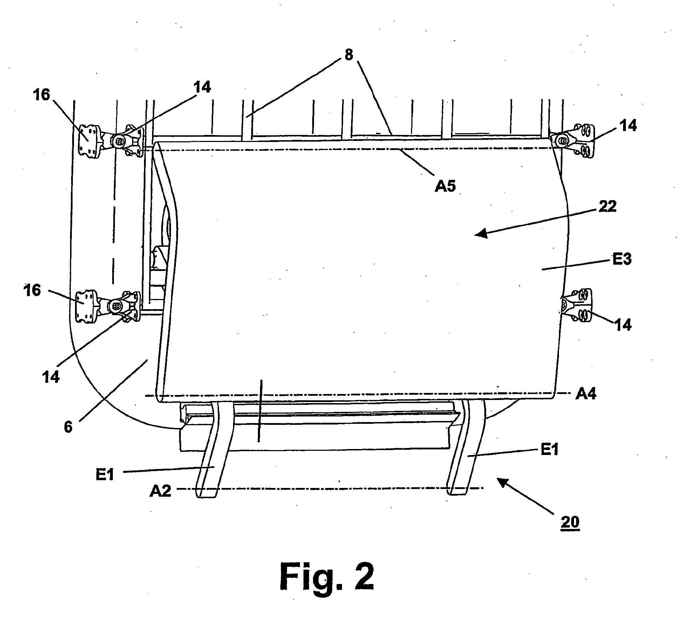

Aus der Fig. 2, die eine schematische Perspektivansicht der erfindungsgemäßen Tür-Anordnung von Fig. 1 in Blickrichtung des Pfeils I in Fig, 1 zeigt (d.h. in einer Blickrichtung von einer Innen- zu einer Außenseite des Flugzeugrumpfes), sind weitere Besonderheiten der erfindungsgemäßen Tür-Anordnung ersichtlich. So ist die Tür-Anordnung derart ausgestaltet, dass sie als wesentliche Elemente des 7-Gelenk-Getriebes 20 zwei an einander gegenüberliegenden Seitenbereichen der Tür 6 im Wesentlichen spiegelbildlich angeordnete Türgelenkmechanismen umfasst, die jeweils ein erstes und zweites Getriebeglied E1, E2 sowie ein Koppelelement K aufweisen (vgl. Fig. 1). Beide Torgelenkrnechanismen verfügen jedoch nur über ein gemeinsames, verbindendes drittels Getriebeglied E3. Dieses erstreckt sich an der dem Inneren des Rumpfes 2 zugewandten Innenseite der Tür 6 über im Wesentlichen die gesamte Türbreite von einem linken zu einem rechten Seitenbereich der Tür 6. Das dritte Getriebeglied E3 ist hierbei als ein flächiges, plattenförmiges Element in Gestalt einer Trittstufe 22 ausgebildet, wie in Fig. 2 deutlich zu erkennen ist. Diese Trittstufe 22 kann entweder eine geschlossene Trittstufenfläche besitzen oder z.B. zum Zwecke der Gewichtserleichterung auch mit Durchbrüchen und/oder Ausnehmungen oder dergleichen versehen sein. So kann die Trittstufe 22 z.B. auch als gitterartiges Bauteil konstruiert sein. Die Trittstufe 22 ist wie die anderen Komponenten der Tür-Anordnung in Leichtbauweise gefertigt.

Um die Schwenkbewegung der Tür 6 in ihren jeweiligen Endlagen zu begrenzen, können Endanschläge, Stopper oder dergleichen vorgesehen sein. Weiterhin können zwischen geeigneten Komponenten der Tür-Anordnung, insbesondere zwischen den einzelnen Elementen 7-Gelenk-Getriebes 20 und/oder des Türrahmens 4 Beschleunigungs-, Verzögerungs- und Dämpfungselemente angebracht werden, mit denen die Bewegung der Tür 6 zu ihrer jeweiligen Endlage hin Kontrolliert und ggf. abgebremst wird. Diese Bauteile sind in den Figuren der besseren Übersichtlichkeit halber nicht dargestellt.

Die Tür 6 bzw. das 7-Gelenk-Getriebe 20 sind für eine manuelle und/oder aktuatorische Betätigung ausgelegt sein. Sofern die Tür 6 bzw. das 7-Gelenk-Getriebe 20 durch einen Aktuator (z.B. in Form eines autonomen Notöffnungsantrieb, der entweder als separater Antrieb ausgeführt oder aber in einen regulären Türantrieb integriert ist) angetrieben wird, kann dieser insbesondere an einem Getriebeglied des 7-Gelenk-Getriebe 20 angreifen. Beispielsweise ist es möglich, einen mit einer Kontrolleinrichtung gekoppelten Drehaktuator zu verwenden, der an der Gelenkachse A2 angreift und das erste Getriebeglied E1 und somit aufgrund der Kopplung durch das Koppelelement K das gesamte 7-Gelenk-Getriebe 20 antreibt und die Tür 6 betätigt.

Es wird nun die Funktionsweise der erfindungsgemäßen Tür-Anordnung ausgehend von dem in Fig. 1 gezeigten ersten Zustand beschrieben werden.

In Fig. 1 und 2 befindet sich die Tür 6 in der Schließlage in einem geschlossenen, abgesenkten und verriegelten Zustand (entsprechenden einem Flugzustand bzw. einem zu einem Flug bereiten Zustand). Der Schwenkwinkel der Tür 6 beträgt 0°. Die rahmenseitige Dichtkante 10 und die türseitige Türdichtung 12 liegen abdichtend aneinander. Die türseitigen und rahmenseitigen Beschläge 14, 16 stehen miteinander in Eingriff. Die Tür-Schwenkachse A1 liegt in einer durch das 7-Gelenk-Getriebe vorbestimmten ersten Position P1 innerhalb der Rumpfstruktur bzw. Rumpfkontur im Bereich des Türrahmens 4. Die beiden Tür-Anhebeglieder H1, H2 sind durch die Sperreinrichtung in der in Fig. 1 gezeigten Position gesperrt.

Zum Entriegeln und Anheben der Tür 6 werden die beiden Tür-Anhebeglieder H1. H2 mit Hilfe der Sperreinrichtung freigegeben und sind damit um ihre Schwenkachsen AS1 und AS2 schwenkbar. Mittels des 7-Gelenk-Getriebes 20 wird die Tür 6 nun annähernd parallel zu der in Fig. 1 gezeigten ursprünglichen Rumpf- bzw. Türaußenkontur geringfügig nach außen bewegt und hierbei etwas angehoben, um die türseitigen und rahmenseitigen Beschläge 14, 16 außer Eingriff zu bringen und die notwendige Freigängigkeit der Tür 6 von diesen Elementen und vom Türrahmen 4 zu erreichen. Die anfänglich nahezu parallele Bewegung der Tür 6 nach außen ist durch die Ausgestaltung des Viergelenks A2, A4, A6 und A7 bedingt, wodurch sich zu Beginn der Schwenkbewegung die Achsen A1 und A3 mit annähernd gleicher Geschwindigkeit nach außen bewegen.

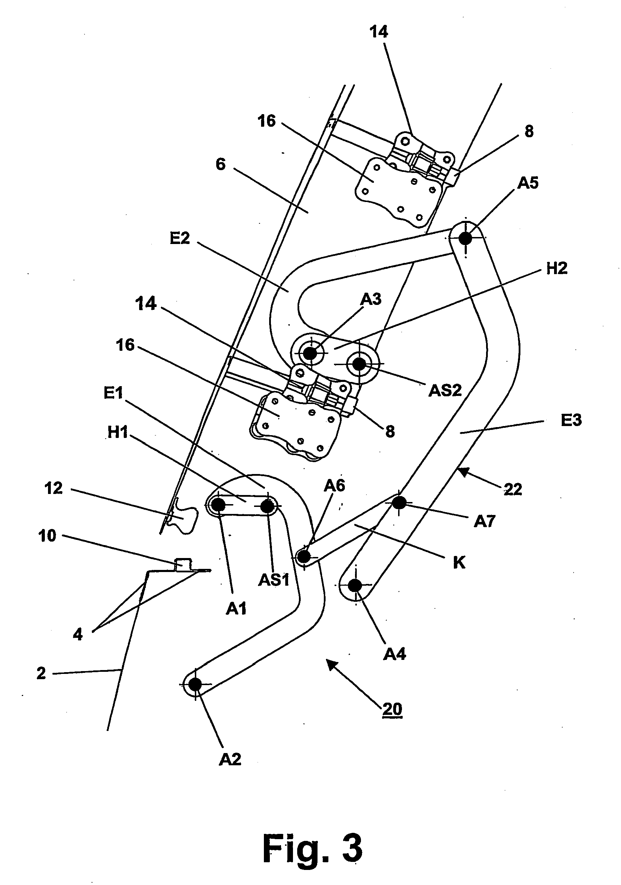

Fig. 3 zeigt eine schematische Querschnittsansicht der erfindungsgemäßen Tür-Anordnung in einem zweiten Zustand, in dem sich die Tür 6 ausgehend von dem in Fig. 1 und 2 dargestellten Zustand in einer angehobenen und entriegelten Schließlage befindet. Der Schwenkwinkel der Tür 6 beträgt immer noch annähernd 0°. Die rahmenseitige Dichtkante 10 und die türseitige Türdichtung 12 sind durch das geringfügige Nach-Außen-Bewegen und Anheben der Tür 6 jedoch schon voneinander getrennt. Und die türseitigen und rahmenseitigen Beschläge 14, 16 stehen außer Eingriff, In der in Fig. 3 gezeigten Position sperrt die Sperreinrichtung nun die Schwenkbewegung der beiden Tür-Anhebeglieder H1, H2 um ihre Schwenkachsen AS1 und AS2. Dadurch sind die erste Gelenkachse A1, welche die Tür-Schwenkachse A1 bildet, und die dritte Gelenkachse A3 relativ zur Tür 6 ortfest positioniert. Die Tür 6 ist jetzt zum Öffnen bereit und kann um die Gelenkachsen A1 herum seitlich und nach unten um ca. 180° in die öffnungslage geschwenkt werden. Da die Gelenkachse/ TQr-Schwenkachse A1 an dem beweglichen zweiten Getriebeglied E1 des 7-Gelenk-Getriebes 20 angeordnet ist, durchläuft die Gelenkachse A1 hierbei relativ zum Türrahmen 4 bzw. dessen unteren Rand eine durch das 7-Gelenk-Getriebe 20 vorbestimmte Bewegungsbahn.

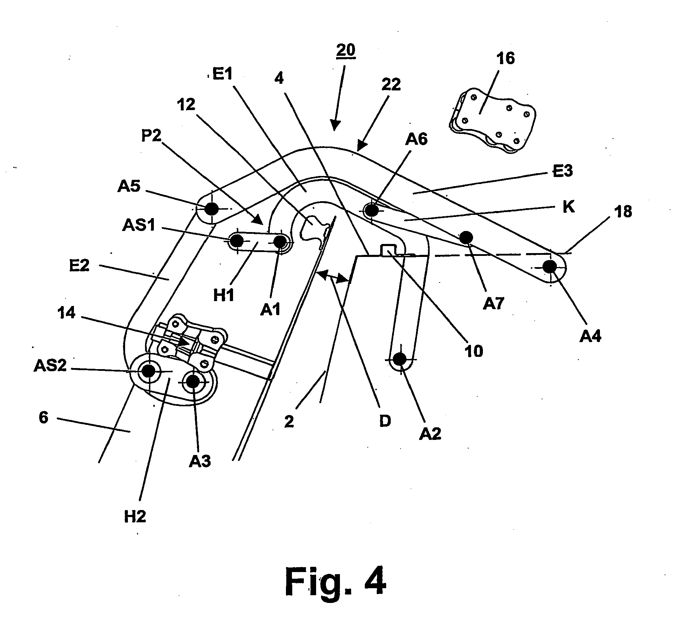

Fig. 4 zeigt eine schematische Querschnittsansicht der erfindungsgemäßen Tür Anordnung von Fig. 1 in einem dritten Zustand, in dem sich die Tür 6 ausgehend von dem in Fig. 3 dargestellten Zustand um einen Schwenkwinkel von 180° aufgeschwenkt in der endgültigen Öfinungslage befindet. Wie in der Fig. 4 gut zu erkennen ist, liegt die Geienkachse/Tür-Schwenkachse A1 hierbei in einer durch das 7-Gelenk-Getriebe 20 vorbestimmten zweiten Position P2 außerhalb der im Bereich des Türrahmens 4 befindlichen Rumpfstruktur bzw. Rumpf-Außenkontur.

Durch einen Vergleich der Fig. 1 und 4 wird deutlich, dass die Getenkachse/Tür-Schwenkachse A1 bei einer durch das 7-Gelenk-Getriebe 20 geführten Bewegung der Tür 6 von der Schließlage zur Öffnungslage (und umgekehrt) eine durch das 7-Gelenk-Getriebe 20 eindeutig bestimmte Kurvenförmige Bewegungsbahn von der ersten Position P1 zur zweiten Position P2 (und umgekehrt) durchläuft. Diese Bewegungsbahn führt von innen nach außen (und umgekehrt) um einen unteren Rand des Türrahmens 4 und dessen untere Außenkante herum. Dadurch wird über den gesamten Schwenkwinkelbereich hinweg eine Kollision zwischen Türkante (hier: Türunterkante) und dem Rumpf 2 bzw. dem Türrahmen 4 vermieden. Die Lage der Gelenkachse/Tür-Schwenkachse A1 in der endgültigen Öffnungslage bestimmt unter Berücksichtigung der Türdicke den seitlichen Abstand D der aufgeschwenkten Tür 6 zum Rumpf 2.

Aus der Fig. 4 ist des Weiteren ersichtlich, dass das erste Getriebeglied E1 in der endgültigen Öffnungslage mit seinem hakenförmigen Endbereich über den unteren Rand des Türrahmens 4 greift. Das dritte Getriebeelement E3 wiederum greift über das erste Getriebeglied E1 hinweg bzw. verläuft geringfügig oberhalb des ersten Getriebeglieds E1 und bildet im geöffneten Zustand der Tür 6 die bereits erwähnte Trittstufe 22. Diese Trittstufe 22 erstreckt sich über den unteren Rand des Türrahmens 4 und erleichtert Passagieren unter Notfallbedingungen den Ausstieg aus dem Rumpf 2. Die Abwinkelung des dritten Getriebeelement E3 liegt in dieser Position etwa im Bereich des hakenförmigen Endes des erste Getriebeglieds E1. Das Koppelelement K erstreckt sich in einem spitzen Winkel zwischen dem ersten und dritten Getflebeelement E1, E3. Das mit dem dritte Getriebeelement E3 verbundene zweite Getriebeelement E2 befindet sich nun außerhalb des Rumpfes 2 bzw. außerhalb des Türrahmens 4. Das hakenförmige Ende des zweiten Getriebeelements E2 befindet sich in der Nähe des unteren türseitigen Beschlags 14.

Ausgehend von der in Fig. 4 dargestellten Öffnungslage erfolgt das Schließen und Verriegeln der Tür 6 auf analoge Weise in umgekehrter Reihenfolge.

Es ist ersichtlich, dass für die zuvor beschriebene Funktionsweise der erfindungsgemäßen Tür-Anordnung die Länge der jeweiligen Getriebeglieder E1 bis E3 und des Koppelelemente K, die jeweilige Anordnung und kinematische Kopplung dieser Komponenten, die gegenseitigen Abstände der Gelenk- und Schwenkachsen A1 bis A7, AS1, AS2 sowie die Anbringung des 7-Gelenk-Getriebes 20 in Bezug zur Tür 6, zur Türdicke und zum Türrahmen 4 so aufeinander abgestimmt sind, dass die Tür 6 zuverlässig verriegelt, angehoben, entriegelt, geöffnet und wieder verschlossen werden kann und bei einem Schwenkvorgang eine Kollision der Tür 6 mit dem Türrahmen 4 und dem Rumpf 2 sowie etwaigen zusätzlichen Anbauelementen stets vermieden wird und im vollständig geöffneten/aufgeschwenkten Zustand der Tür 6 ein erforderlicher Mindestabstand zur Außenseite des Rumpfes 2 erzielt wird.

Die Erfindung ist nicht auf das obige Ausführungsbeispiel beschränkt, das lediglich der Erläuterung des Kemgedankens der Erfindung dient. Im Rahmen des Schutzumfangs kann die erfindungsgemäße Tür-Anordnung auch andere als die oben konkret beschriebene Ausgestaltungsform annehmen. So ist es beispielsweise möglich, die Tür in anderen erfindungsgemäßen Ausführungsformen auch als nach oben oder seitlich schwenkende Tür auszubilden. Ferner ist es denkbar, das erfindungsgemäße Prinzip des oben beschriebenen 7-Gelenk-Getriebs beizubehalten, jedoch in kinematischer Umkehr diejenigen Elemente und Achsen, die dem Türrahmen bzw. Rumpfstruktur zugeordnet sind, nunmehr der Tür zuzuordnen, und diejenigen, die der Tür zugeordnet sind, nunmehr dem Türrahmen bzw. der Rumpfstruktur zuzuordnen.

Die hebelartigen Getriebeglieder E1 bis E3 sowie das Koppelelement K können in anderen Ausführungsvarianten insbesondere in Abhängigkeit der Einbausituation der Tür im Rumpf bzw. Türrahmen sowie der Dicke und Ausgestaltung der Tür und ihrer Türstruktur und des gewünschten maximalen Türschwenkwinkels auch andersartig geformt und hierbei z.B. geradlinig oder mehrfach gekrümmt bzw. abgewinkelt sein.

Das mindestens eine Koppelelement kann in bestimmten Anwendungsfällen z.B. auch als Parallelogramm mit zwei Koppelelementarmen ausgestaltet sein. Auch sind grundsätzlich mehrere Koppelelemente möglich, sofern diese dem 7-Gelenk-Getriebe weiterhin den Getriebefreiheitsgrad 1 verleihen. Ferner sind Ausführungsformen realisierbar, bei denen die dem Koppelelement zugeordneten Gelenkachsen A6 und A7 an lateralen Vorsprüngen des ersten und dritten Getriebeglieds angeordnet sind.

Anstelle der im obigen Beispiel verwendeten schwenkbaren, hebelartigen Tür-Anhebeglieder, die nur über rein rotatorische Gelenkachsen verfügen, können auch andersartig ausgestaltete Tür-Anhebeglieder vorgesehen werden, welche im Wesentlichen die gleichen Funktionen erfüllen. So sind beispielsweise Tür-Anhebeglieder denkbar, die eine teilweise oder vollständig translatorisch arbeitende Kinematik aufweisen und die Gelenkachse A1 und A3 bei einem Schwenkvorgang der Tür ebenfalls relativ zur Tür ortsfest positionieren. Falls die Tür als eine Tür ausgestaltet wird, die zum Verriegeln und Entriegeln nicht abgesenkt und angehoben werden muss, kann auf die Tür-Anhebeglieder H1, H2 und eine entsprechende Hubeinrichtung auch verzichtet werden. Es ist dann möglich, die Gelenkachsen A1 und A3 direkt an der Tür und relativ zu dieser ortsfest anzuordnen.

Anstelle das dritte Getriebeglied E3 selbst als Trittstufe auszugestalten, ist es zudem möglich, ein zusatzgetriebe an dem dritten Getriebeglied E3 bzw. einem entsprechenden Getriebeglied-Paar anzubringen, weiches die Trittstufe trägt.

Diese Ausgestaltungsform kann z.B. sinnvoll sein, um mittels des Zusatzgetriebes eine exakte horizontale Lage der Trittstufe im geöffneten Zustand der Tür zu erzielen.

Mindestens ein Getriebeglied des 7-Gelenk-Getriebes oder auch das Koppelelement können in bestimmten Anwendungsfällen längenveränderlich ausgebildet sein. Z.B. ist es möglich, ein solches längenveränderliches Element in Form eines Linearaktuators auszubilden. Das längenveränderliche Element übemimmt dann eine Doppelfunktion, mit der sowohl eine bestimmte Getriebekinematik als auch eine Betätigung des 7-Gelenk-Getriebes und/oder der Tür erzielt wird.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 2: Rumpf
- 4: Türrahmen
- 6: Tür / Notausstiegstür
- 8: Türstruktur
- 10: Dichtkante
- 12: Türdichtung
- 14: Türseitige Beschläge
- 16: Rahmenseitig Beschläge
- 18: Kabinenboden
- 20: 7-Gelenk-Getriebe
- 22: Trittstufe

- A1 - A7: Gelenkachsen von 20
- AS1, AS2: Schwenkachsen von H1, H2
- D: Abstand
- E1 - E3: Getriebeglieder
- H1, H2: Tür-Anhebeglieder
- P1, P2: Positionen von A1

## Patentansprüche

1. Tür-Anordnung eines Luftfahrzeugs, Welches über einen Rumpf (2) mit einer Rumpfstruktur verfügt, zu der ein Türrahmen (4) gehört, der eine Toröffnung umgibt, umfassend:
- eine Tür (6), die in dem Türrahmen (4) anzuordnen ist,
- eine Tür-Hubeinrichtung, und
- einen Türgelenkmechanismus, der an der Tür (6) und der Rumpfstruktur angreift und
ein mit einer ersten bis siebten Gelenkachse (A1 bis A7) versehenes 7-Gelenk-Getriebe (20) aufweist, mit dem die Tür (6) ausschließlich rotationsgelenkig geführt über einen vorbestimmten Schwenkwinkelbereich von einer im Türrahmen (4) befindlichen Schließlage zu einer außerhalb des Türrahmens (4) und des Rumpfes (2) befindlichen Öffnungslage und zurück schwenkbar ist;
- wobei das 7-Gelenk-Getriebe (20) drei gelenkig gelagerte hebelartige Getriebeglieder (E1 bis E3) sowie mindestens ein gelenkig, gelagertes hebelartiges Koppelelement (K) aufweist, welches zwei (E1, E3) der drei hebelartigen Getriebeglieder (E1 bis E3) gelenkig miteinander verbindet und dem 7-Gelenk-Getriebe (20) den Getriebefreiheitsgrad 1 verleiht;
**dadurch gekennzeichnet, dass**
in einem Zustand, in dem sich die Tür in der Schließlage befindet, und bei Betrachtung des 7-Gelenk-Getriebes (20) in Richtung seiner zueinander parallele Gelenkachsen (A1 bis A7)
- das erste Getriebeglied (E1)
an seinem oberen Ende mit der ersten Gelenkachse (A1), die durch die Tür-Hubeinrichtung ortsfest retativ zur schwenkbaren Tür (6) positionierbar ist und die Tür-Schwenkachse (A1) bildet, gelenkig an der Tür (6) gelagert (H1. HS1) ist, und
an seinem unteren Ende mit der zweiten Gelenkachse (A2), die in Bezug zum Türrahmen (4) ortsfest ist, gelenkig an dem Türrahmen (4) gelagert ist;
- das zweite Getriebeglied (E2) an seinem unteren Ende mit der dritten Gelenkachse (A3), die durch die Tür-Hubeinrichtung ortsfest relativ zur schwenkbaren Tür (6) positionierbar ist, gelenkig an der Tür (6) gelagert (H2, HS2) ist;
- das dritte Getriebeglied (E3) an seinem unteren Ende mit der vierten Gelenkachse (A4), die in Bezug zum Türrahmen (4) ortsfest ist, gelenkig am Türrahmen (4) gelagert ist;
- ein oberes freies Ende des zweiten Getriebeglieds (E2) über die fünfte Gelenkachse (A5), die relativ zur Tür (6) und dem Türrahmen (4) nicht-ortsfest ist, gelenkig mit einem oberen freien Ende des dritten Getriebegliedes (E3) verbunden ist,
so dass die besagten oberen Enden des zweiten (E2) und dritten Getriebeglieds (E3) die fünfte Achse (A5) als gemeinsame Achse (A5) besitzen, und
das zweite Getriebeglied (E2) um die dritte Gelenkachse (A3) und das dritte Getriebeglied (E3) um die vierte Gelenkachse (A4) schwenkbar ist; und
- das Koppelelement (K) an seinem unteren Ende mit der sechsten Gelenkachse (A6) gelenkig an dem ersten Getriebeglied (E1) und mit seinem oberen Ende mit der siebten Gelenkachse (A7) an dem dritten Getriebeglied (E3) angreift,

2. Tür-Anordnung nach Anspruch 1,
**dadurch gekennzeichnet, dass**
- eine der Gelenkachsen (A1) des 7-Gelenk-Getriebes (20) eine eindeutige, rotatorische und relativ zur Tür (6) ortsfest positionierbare Tür-Schwenkachse (A1) definiert; und
- die Tür-Schwenkachse (A1)
in der Schließlage der Tür (6) in einer durch das 7-Gelenk-Getriebe (20) vorbestimmten ersten Position (P1) innerhalb der Rumpfstruktur im Bereich des Türrahmens (4) liegt, und
in der Öffnungslage der Tür (6) in einer durch das 7-Gelenk-Getriebe (20) vorbestimmten zweiten Position (P2) außerhalb der im Bereich des Türrahmens (4) befindlichen Rumpfstruktur liegt, und
bei einer durch das 7-Gelenk-Getriebe (20) geführten Bewegung der Tür (6) von der Schließlage zur Öffnungslage, und umgekehrt, eine durch das 7-Gelenk-Getriebe (20) eindeutig bestimmte bogenförmige Bewegungsbahn von der ersten Position (P1) zur zweiten Position (P2), und umgekehrt, durchläuft.

3. Tür-Anordnung nach Anspruch 1 oder 2,
**dadurch gekennzeichnet, dass**
die Gelenkachsen (A1 bis A7) der Rotationsgelenke des 7-Gelenk-Getriebes (20) zueinander parallel verlaufen.

4. Tür-Anordnung nach einem oder mehreren der vorher genannten Ansprüche,
**dadurch gekennzeichnet, dass**
diese einen Tür-Verriegelungsmechanismus und eine Hubeinrichtung (H1, H2) besitzt, mit der die Tür (6) ausgehend von einer verriegelten Schließlage in eine entriegelte Schließlage anhebbar ist, von der ausgehend die Tür (6) in die Öffnungslage bewegbar ist, und mit der die Tür (6) umgekehrt wieder von der entriegelten Schließlage in die verriegelte Schließlage absenkbar ist;

5. Tür-Anordnung nach einem oder mehreren der vorher genannten Ansprüche,
**dadurch gekennzeichnet, dass**
die Hubeinrichtung (H1, H2) als ein Teil des 7-Gelenk-Getriebes (20) ausgebildet ist.

6. Tür-Anordnung nach einem oder mehreren der vorher genannten Ansprüche,
**dadurch gekennzeichnet, dass**
- die als Teil des 7-Gelenk-Getriebes (20) ausgebildete Hubeinrichtung zwei schwenkbare hebelartige Tür-Anhebeglieder (H1, H2) besitzt,
- das erste Tür-Anhebeglied (H1) an einem Ende über die erste Gelenkachse (A1) gelenkig am oberen Ende des ersten Getriebeglieds (E1) und mit dem anderen Ende über eine erste Schwenkachse (AS1), die in Bezug zur Tür (6) ortsfest ist, an der Tür (6) angreift,
- das zweite Tür-Anhebeglied (H2) an einem Ende über die dritte Gelenkachse (A3) gelenkig am unteren Ende des zweiten Getriebeglieds (E2) und mit dem anderen Ende über eine zweite Schwenkachse (AS2), die in Bezug zur Tür (6) ortsfest ist, an der Tür (6) angreift, und
- eine den beiden Tür-Anhebegliedem (H1, H2) zugeordnete Sperreinrichtung vorgesehen ist, die
zum Anheben der Tür (6) in die entriegelte Schließlage und zum Absenken der Tür (6) in die verriegelte Schließlage eine Schwenkbewegung der beiden Tür-Anhebeglieder (H1, H2) um ihre Schwenkachsen (AS1, AS2) zulässt und damit eine Bewegung der ersten Gelenkachse (A1) und der dritten Gelenkachse (A3) relativ zur Tür (6) gestattet, und die
zum Aufschwenken der angehobenen Tür (6) von der entriegelten Schließlage in die Öffnungslage, und umgekehrt zum Zurückschwenken von der Öffnungslage in die angehobene entriegelte Schließlage, die Schwenkbewegung der beiden Tür-Anhebeglieder (H1, H2) in einer vorbestimmten Schwenkposition sperrt und damit die erste Gelenkachse (A1) und die dritte Gelenkachse (A3) relativ zur Tür (6) ortfest positioniert.

7. Tür-Anordnung nach einem oder mehreren der vorher genannten Ansprüche,
**dadurch gekennzeichnet, dass**
diese zwei an einander gegenüberliegenden Seitenbereichen der Tür (6) im Wesentlichen spiegelbildlich angeordnete Türgelenkmechanismen umfasst, die jeweils über ein erstes (E1) und zweites Getriebeglied (E2) und über ein gemeinsames drittes Getriebeglied (E3) verfügen.

8. Tür-Anordnung nach Anspruch 7,
**dadurch gekennzeichnet, dass**
das gemeinsame dritte Getriebeglied (E3) als ein flächiges, plattenförmiges Element (22) ausbildet ist.

9. Tür-Anordnung nach Anspruch 7 oder 8,
**dadurch gekennzeichnet, dass**
das gemeinsame dritte Getriebeelement (E3) im geöffneten Zustand der Tür (6) eine Trittstufe (22) bildet.

10. Tür-Anordnung nach einem oder mehreren der vorher genannten Ansprüche,
**dadurch gekennzeichnet, dass**
der Schwenkwinkelbereich von 0 Grad bis größer 90 Grad, insbesondere 0 Grad bis 180 Grad, insbesondere 0 Grad bis größer 180 Grad reicht.

11. Tür-Anordnung nach Anspruch 1,
**dadurch gekennzeichnet, dass**
der Türgelenkmechanismus an einem unteren Bereich des Türrahmens (4) der Rumpfstruktur angreift und von der Schließlage nach unten zu der Öffnungslage und zurück schwenkbar ist.

12. Tür-Anordnung nach Anspruch 1,
**dadurch gekennzeichnet, dass**
der Türgelenkmechanismus an einem oberen Bereich des Türrahmens (4) der Rumpfstruktur angreift und von der Schließlage nach oben zu der Öffnungslage und zurück schwenkbar ist.

13. Tür-Anordnung nach Anspruch 1,
**dadurch gekennzeichnet, dass**
der Türgelenkmechanismus an einem seitlichen Bereich des Türrahmens (4) der Rumpfstruktur angreift und von der Schließlage seitlich zu der Öffnungslage und zurück schwenkbar ist.

14. Tür-Anordnung nach einem oder mehreren der vorher genannten Ansprüche,
**dadurch gekennzeichnet, dass**
die Tür eine Tür ist, die ausgewählt ist aus einer Gruppe von Türen, umfassend: eine Notausstiegstür, eine Notausstiegsluke, eine Passagiertür, eine Cargotür, eine Heckklappe.

15. Luftfahrzeug, insbesondere ein Tragflächenflugzeug, umfassend mindestens eine Flugzeugtür-Anordnung nach einem oder mehreren der Ansprüche 1 bis 14.

## Claims

1. Door arrangement for an aircraft that has a fuselage (2) with a fuselage structure that includes a door frame (4) surrounding a door opening, comprising:
- a door (6) to be disposed inside the door frame (4),
- a door lifting device, and
- a door joint mechanism attached to the door (6) and to the fuselage structure, and including a seven-joint linkage (20) provided with a first to seventh joint axis (A1 to A7), by which linkage the door (6) can be pivoted, with guidance exclusively in a rotationally articulated manner, over a predefined pivoting angle range from a closed position inside the door frame (4) to an open position outside the door frame (4) and the fuselage (2) and back;
- the seven-joint linkage (20) having three articulatedly mounted lever-like linkage members (E1 to E3) and at least one articulatedly mounted lever-like coupling element (K) which joins two (E1, E3) of the three lever-like linkage members (E1 to E3) to each other in an articulated manner and imparts one degree of freedom to the seven-joint linkage (20);
**characterised in that**,
in a state in which the door is in the closed position and when viewing the seven-joint linkage (20) in the direction of its joint axes (A1 to A7) parallel to one another,
- the first linkage member (E1)
is mounted (H1, HS1) at its upper end with the first joint axis (A1) in an articulated manner on the door (6), the first joint axis being able to be positioned by the door lifting device so as to be stationary relative to the pivotable door (6) and forming the door pivot axis (A1), and
is mounted at its lower end with the second joint axis (A2) in an articulated manner on the door frame (4), the second joint axis (A2) being stationary relative to the door frame (4);
- the second linkage member (E2) is mounted (H2, HS2) at its lower end with the third joint axis (A3) in an articulated manner on the door (6), the third joint axis (A3) being able to be positioned by the door lifting device so as to be stationary relative to the pivotable door (6) ;
- the third linkage member (E3) is mounted at its lower end with the fourth joint axis (A4) in an articulated manner on the door frame (4), the fourth joint axis (A4) being stationary relative to the door frame (4);
- an upper free end of the second linkage member (E2) is connected in an articulated manner to an upper free end of the third linkage member (E3) via the fifth joint axis (A5), the fifth joint axis (A5) being non-stationary relative to the door (6) and the door frame (4),
so that the said upper ends of the second linkage member (E2) and of the third linkage member (E3) have the fifth axis (A5) as a shared axis (A5), and
the second linkage member (E2) is pivotable about the third joint axis (A3) and the third linkage member (E3) is pivotable about the fourth joint axis (A4); and
- at its lower end, the coupling element (K) with the sixth joint axis (A6) is attached in an articulated manner to the first linkage member (E1) and, at its upper end, the coupling element (K) with the seventh joint axis (A7) is attached to the third linkage member (E3).

2. Door arrangement according to Claim 1,
**characterised in that**
- one of the joint axes (A1) of the seven-joint linkage (20) defines an unambiguous door pivot axis (A1) that is rotatory and that can be positioned so as to be stationary relative to the door (6); and
- the door pivot axis (A1)
in the closed position of the door (6) is in a first position (P1), predefined by the seven-joint linkage (20), inside the fuselage structure in the area of the door frame (4), and
in the open position of the door (6) is in a second position (P2), predefined by the seven-joint linkage (20), outside the fuselage structure located in the area of the door frame (4), and
during a movement of the door (6), guided by the seven-joint linkage (20), from the closed position to the open position, and vice versa, follows a curved path of motion unambiguously defined by the seven-joint linkage (20) from the first position (P1) to the second position (P2), and vice versa.

3. Door arrangement according to Claim 1 or 2,
**characterised in that**
the joint axes (A1 to A7) of the rotational joints of the seven-joint linkage (20) run parallel to one another.

4. Door arrangement according to one or more of the preceding claims,
**characterised in that**
it has a door locking mechanism and a lifting device (H1, H2), by which the door (6) can be raised starting from a locked closed position into an unlocked closed position, and starting from the latter position the door (6) can be moved into the open position, and by which the door (6), conversely, can be lowered from the unlocked closed position into the locked closed position again.

5. Door arrangement according to one or more of the preceding claims,
**characterised in that**
the lifting device (H1, H2) is configured as a part of the seven-joint linkage (20).

6. Door arrangement according to one or more of the preceding claims,
**characterised in that**
- the lifting device, configured as part of the seven-joint linkage (20), has two pivotable lever-like door lifting members (H1, H2),
- one end of the first door lifting member (H1) is attached in an articulated manner to the upper end of the first linkage member (E1) via the first joint axis (A1) and the other end is attached to the door (6) via a first pivot axis (AS1) which is stationary relative to the door (6),
- one end of the second door lifting member (H2) is attached in an articulated manner to the lower end of the second linkage member (E2) via the third joint axis (A3) and the other end is attached to the door (6) via a second pivot axis (AS2) which is stationary relative to the door (6), and
- a blocking device associated with the two door lifting members (H1, H2) is provided which,
in order to raise the door (6) into the unlocked closed position and to lower the door (6) into the locked closed position, allows a pivoting movement of the two door lifting members (H1, H2) about their pivot axes (AS1, AS2) and thus permits a movement of the first joint axis (A1) and of the third joint axis (A3) relative to the door (6), and which,
in order to pivot the raised door (6) open from the unlocked closed position into the open position and, conversely, pivot it back from the open position into the raised unlocked closed position, blocks the pivoting movement of the two door lifting members (H1, H2) in a predefined pivoting position and thus positions the first joint axis (A1) and the third joint axis (A3) so as to be stationary relative to the door (6).

7. Door arrangement according to one or more of the preceding claims,
**characterised in that**
it comprises two door joint mechanisms arranged substantially mirror-invertedly on mutually opposite side areas of the door (6), the said mechanisms each having a first linkage member (E1) and a second linkage member (E2), and having a shared third linkage member (E3).

8. Door arrangement according to Claim 7,
**characterised in that**
the shared third linkage member (E3) is configured as a flat, plate-like element (22).

9. Door arrangement according to Claim 7 or 8,
**characterised in that**
the shared third linkage member (E3) forms a step (22) when the door (6) is in the open state.

10. Door arrangement according to one or more of the preceding claims,
**characterised in that**
the pivoting angle range goes from 0 degrees to greater than 90 degrees, in particular 0 degrees to 180 degrees, in particular 0 degrees to greater than 180 degrees.

11. Door arrangement according to Claim 1,
**characterised in that**
the door joint mechanism is attached to a lower area of the door frame (4) of the fuselage structure and can be pivoted from the closed position downwards to the open position and back.

12. Door arrangement according to Claim 1,
**characterised in that**
the door joint mechanism is attached to an upper area of the door frame (4) of the fuselage structure and can be pivoted from the closed position upwards to the open position and back.

13. Door arrangement according to Claim 1,
**characterised in that**
the door joint mechanism is attached to a lateral area of the door frame (4) of the fuselage structure and can be pivoted from the closed position laterally to the open position and back.

14. Door arrangement according to one or more of the preceding claims,
**characterised in that**
the door is a door selected from a group of doors, comprising: an emergency-exit door, an emergency-exit hatch, a passenger door, a cargo door, a tailgate.

15. Aircraft, especially a fixed-wing aircraft, comprising at least one aircraft door arrangement according to one or more of Claims 1 to 14.

## Revendications

1. Système de porte d'un aéronef, qui dispose d'un fuselage (2) avec une structure de fuselage dont fait partie un cadre de porte (4), lequel entoure une ouverture de porte comprenant :
- une porte (6) dans laquelle doit être disposé le cadre de porte (4),
- un dispositif de levage de porte, et
- un mécanisme d'articulation de porte, qui s'applique sur la porte (6) et la structure de fuselage et
un mécanisme à 7 articulations (20) doté d'un premier jusqu'à un septième axes d'articulation (A1 à A7), mécanisme avec lequel la porte (6) est guidée exclusivement de façon articulée par rotation et peut être basculée sur une plage d'angles de pivotement prédéfinie depuis une position de fermeture se trouvant dans le cadre de porte (4) jusqu'à une position d'ouverture se trouvant à l'extérieur du cadre de porte (4) et du fuselage (2) et inversement ;
- le mécanisme à 7 articulations (20) présentant trois éléments de mécanisme (E1 à E3) de type levier montés de façon articulée et au moins un élément de couplage (K) de type levier monté de façon articulée, lequel relie deux (E1, E3) des trois éléments du mécanisme (E1 à E3) de type levier de façon articulée les uns avec les autres et confère le degré de liberté de mécanisme 1 au mécanisme à 7 articulations (20),
**caractérisé en ce que**
dans un état, dans lequel la porte se trouve dans la position de fermeture et lorsqu'on regarde le mécanisme à 7 articulations (20) en direction de ses axes d'articulation (A1 à A7) parallèles entre eux,
- le premier élément de mécanisme (E1)
est monté (H1, HS1) sur son extrémité supérieure avec le premier axe d'articulation (A1), qui peut être positionné par le dispositif de levage de porte de façon fixe par rapport à la porte (6) pivotante et forme l'axe de pivotement de porte (A1), de façon articulée sur la porte (6), et
est monté sur son extrémité inférieure avec le deuxième axe d'articulation (A2), qui est fixe par rapport au cadre de porte (4), de façon articulée sur le cadre de porte (4) ;
- le second élément de mécanisme (E2) est monté (H2, HS2) sur son extrémité inférieure avec le troisième axe d'articulation (A3), qui peut être positionné par le dispositif de levage de porte de façon fixe par rapport à la porte (6) pivotante, de façon articulée sur la porte (6) ;
- le troisième élément de mécanisme (E3) est monté sur son extrémité inférieure avec le quatrième axe d'articulation (A4), qui est fixe par rapport au cadre de porte (4), de façon articulée sur le cadre de porte (4) ;
- une extrémité libre supérieure du second élément de mécanisme (E2) est reliée par le cinquième axe d'articulation (A5), qui n'est pas fixe par rapport à la porte (6) et au cadre de porte (4), de façon articulée à une extrémité libre supérieure du troisième élément de mécanisme (E3),
de sorte que lesdites extrémités supérieures du deuxième élément de mécanisme (E2) et du troisième élément de mécanisme (E3) présentent le cinquième axe (A5) comme axe (A5) commun, et
le second élément de mécanisme (E2) peut basculer autour du troisième axe d'articulation (A3) et le troisième élément de mécanisme (E3) peut basculer autour du quatrième axe d'articulation (A4), et
- l'élément de couplage (K) s'applique par son extrémité inférieure avec le sixième axe d'articulation (A6) de façon articulée sur le premier élément de mécanisme (E1) et par son extrémité supérieure avec le septième axe d'articulation (A7) sur le troisième élément de mécanisme (E3).

2. Système de porte selon la revendication 1,
**caractérisé en ce que**
- l'un des axes d'articulation (A1) du mécanisme à 7 articulations (20) définissent un axe de pivotement de porte (A1) clair, rotatif et pouvant être positionné de façon fixe par rapport à la porte (6) ; et
- l'axe de pivotement de porte (A1)
se situe, dans la position de fermeture de la porte (6), dans une première position (P1) prédéfinie par le mécanisme à 7 articulations (20) à l'intérieur de la structure de fuselage dans la zone du cadre de porte (4), et
se situe, dans la position d'ouverture de la porte (6), dans une seconde position (P2) prédéfinie par le mécanisme à 7 articulations (20) à l'extérieur de la structure de fuselage se trouvant dans la zone du cadre de porte (4), et
lors d'un déplacement, guidé par le mécanisme à 7 articulations (20), de la porte (6) de la position de fermeture vers la position d'ouverture et inversement, parcourt une trajectoire de déplacement en forme d'arc définie clairement par le mécanisme à 7 articulations (20) depuis la première position (P1) vers la seconde position (P2), et inversement.

3. Système de porte selon la revendication 1 ou 2,
**caractérisé en ce que**
les axes d'articulation (A1 à A7) des articulations de rotation du mécanisme à 7 articulations (20) sont agencés parallèlement entre eux.

4. Système de porte selon l'une quelconque ou plusieurs des revendications susmentionnées,
**caractérisé en ce que**
le système présente un mécanisme de verrouillage de porte et un système de levage (H1, H2) avec lequel la porte (6) peut être soulevée à partir d'une position de fermeture verrouillée dans une position de fermeture déverrouillée, à partir de laquelle la porte (6) peut être déplacée dans la position d'ouverture, et avec lequel la porte (6) peut être abaissée à l'inverse à nouveau de la position de fermeture déverrouillée dans la position de fermeture verrouillée.

5. Système de porte selon l'une quelconque ou plusieurs des revendications susmentionnées,
**caractérisé en ce que**
le système de levage (H1, H2) est conçu comme une partie du mécanisme à 7 articulations (20).

6. Système de porte selon l'une quelconque ou plusieurs des revendications susmentionnées,
**caractérisé en ce que**
- le système de levage conçu comme partie du mécanisme à 7 articulations (20) présente deux éléments de soulèvement de porte (H1, H2) de type levier pivotants,
le premier élément de soulèvement de porte (H1) s'applique sur la porte (6) par une extrémité de façon articulée au moyen du premier axe d'articulation (A1) sur l'extrémité supérieure du premier élément de mécanisme (E1) et par l'autre extrémité au moyen d'un premier axe de pivotement (AS1), qui est fixe par rapport à la porte (6),
- le second élément de soulèvement de porte (H2) s'applique sur la porte (6) par une extrémité de façon articulée au moyen du troisième axe d'articulation (A3) sur l'extrémité inférieure du second élément de mécanisme (E2) et par l'autre extrémité au moyen d'un second axe de pivotement (AS2), qui est fixe par rapport à la porte (6), et
- un dispositif de blocage attribué aux deux éléments de soulèvement de porte (H1, H2) est prévu, lequel autorise un mouvement de basculement des deux éléments de soulèvement de porte (H1, H2) autour de leurs axes de pivotement (AS1, AS2) pour le soulèvement de la porte (6) dans la position de fermeture déverrouillée et pour l'abaissement de la porte (6) dans la position de fermeture verrouillée et autorise ainsi un déplacement du premier axe d'articulation (A1) et du troisième axe d'articulation (A3) par rapport à la porte (6), et
qui bloque le mouvement de basculement des deux éléments de soulèvement de porte (H1, H2) dans une position de pivotement prédéfinie pour le basculement vers le haut de la porte (6) soulevée de la position de fermeture déverrouillée dans la position d'ouverture, et inversement pour le basculement arrière de la position d'ouverture dans la position de fermeture soulevée et déverrouillée et positionne ainsi le premier axe d'articulation (A1) et le troisième axe d'articulation (A3) de façon fixe par rapport à la porte (6).

7. Système de porte selon l'une quelconque ou plusieurs des revendications susmentionnées,
**caractérisé en ce que**
celui-ci comprend deux mécanismes d'articulation de porte disposés de façon sensiblement symétrique sur des zones latérales se faisant face de la porte (6), lesquels mécanismes disposent chacun d'un premier élément de mécanisme (E1) et d'un second élément de mécanisme (E2) et d'un troisième élément de mécanisme (E3) commun.

8. Système de porte selon la revendication 7,
**caractérisé en ce que**
le troisième élément de mécanisme (E3) commun est conçu comme un élément (22) plat et en forme de plaque.

9. Système de porte selon la revendication 7 ou 8,
**caractérisé en ce que**
le troisième élément de mécanisme (E3) commun forme une marche (22) lorsque la porte (6) est ouverte.

10. Système de porte selon l'une quelconque ou plusieurs des revendications susmentionnées,
**caractérisé en ce que**
la plage d'angles de pivotement va de 0 degré à plus de 90 degrés, en particulier de 0 degré à 180 degrés, en particulier de 0 degré jusqu'à plus de 180 degrés.

11. Système de porte selon la revendication 1,
**caractérisé en ce que**
le mécanisme d'articulation de porte s'applique sur une zone inférieure du cadre de porte (4) de la structure de fuselage et peut basculer de la position de fermeture vers le bas à la position d'ouverture et inversement.

12. Système de porte selon la revendication 1,
**caractérisé en ce que**
le mécanisme d'articulation de porte s'applique sur une zone supérieure du cadre de porte (4) de la structure de fuselage et peut basculer de la position de fermeture vers le haut à la position d'ouverture et inversement.

13. Système de porte selon la revendication 1,
**caractérisé en ce que**
le mécanisme d'articulation de porte s'applique sur une zone latérale du cadre de porte (4) de la structure de fuselage et peut basculer de la position de fermeture sur le côté à la position d'ouverture et inversement.

14. Système de porte selon l'une ou plusieurs des revendications citées plus haut,
**caractérisé en ce que**
la porte est une porte qui est choisie dans un groupe de portes comprenant une porte de sortie de secours, un hublot de sortie de secours, une porte passagers, une porte cargo, une trappe arrière.

15. Aéronef, en particulier un avion à surface portante, comprenant au moins un dispositif de porte de véhicule selon l'une quelconque ou plusieurs des revendications 1 à 14.
